# EUROPEAN PATENT SPECIFICATION

(11) **EP 4 339 047 B1**
(45) Date of publication and mention of the grant of the patent: **15.07.2026**
(21) Application number: 22195257.5
(22) Date of filing: 13.09.2022
(51) Int. Cl.: B60T 17/00, F15B 21/00

(54) **SILENCER WITH SKIRT FOR COMPRESSED GAS SYSTEMS**
SCHALLDÄMPFER MIT SCHÜRZE FÜR DRUCKGASSYSTEME
SILENCIEUX AVEC JUPE POUR SYSTÈMES À GAZ COMPRIMÉ

(43) Date of publication of application: 20.03.2024
(73) Proprietor: KNORR-BREMSE Systeme für Nutzfahrzeuge GmbH, 80809 München (DE)
(72) Inventor: SOMODI, Richard, 6034 Helvécia (HU); TOTH, Tamas, 6000 Kecskemet (HU); COMPERA, Yves, 85748 Garching bei München (DE); LÖRINCZI, Ottó Botond, 1038 Budapest (HU)

(56) References cited:
- EP-A1- 3 505 801
- EP-B1- 2 082 138
- EP-B1- 3 412 920
- DE-A1- 102016 100 140

## Description

The present invention relates to a silencer for systems dealing with compressed gas, e.g. systems working with compressed air, in particular for the use in commercial vehicles. For instance, pneumatic brakes require compressed air.

Systems working with compressed gas, for example compressed air systems, can release large amounts of compressed gas to the environment within short time. This depressurization of the gas can result to remarkable noises. However, noise emissions have to be kept below an admissible level, and hence, silencers for systems of compressed gas are usually necessary.

In commercial electric vehicles, the largest part of the noise is generated by the mixing of a high velocity air flow with ambient air.

In prior art, document WO 2019/063350 A1 is known, disclosing a noise damper for compressed air systems with an inlet channel and a chamber for receiving sound-damping material. In this case, the inlet channel and the chamber are separated perpendicular to the compressed air flow by a separation plate, which in an outer peripheral region of the compressed air flow has a plurality of openings in order to introduce compressed air into the chamber. Such noise damper has a dampening function for noises created by a flow of compressed air, e.g. in a valve releasing compressed air.

Further, document EP 2 082 138 B1 is known from prior art. Said document discloses a pressurized air muffler that is penetrated by an unobstructed air flow channel. A section of the length of the air flow channel penetrates a sound-absorbing device and joins on said sound-absorbing device with an air escape opening to an expansion chamber, which is delimited by a multi-layer closing wall.

Further, document EP 3 412 920 B1 is known form prior art. It discloses a silencer being equipped with a hollow tubular portion in which a discharge flow passage is formed that communicates on one end side thereof with a discharge port of a fluid pressure device through which a pressure fluid is discharged, a cap member attached to another end part of the tubular portion, a sound absorbing member attached to an inner wall surface of the tubular portion, and a plurality of discharge ports adapted to discharge the pressure fluid, which has passed through the discharge flow passage in an axial direction of the tubular portion, in radial directions perpendicular to the axial direction.

For electric commercial vehicles with a pneumatic brake system, a very low noise is of extreme importance. Presently, a valve assembly through which compressed air flows should fulfill the requirement of at most 72 dB(A) in 7 m distance, according to ISO R362 and EEC92/97 and ECE R51.

However, for an electric commercial vehicle with pneumatic brakes (for which the electric motor is very silent compared to other engines), the noise value of at most 72 dB(A) in 7 m distance is still too high.

Hence, there is a need for novel silencers, which are able to reduce a noise emission to below 68 dB(A), or more preferably below 60 dB(A) within 7 m distance from the vehicle. In commercial electric vehicles, the largest part of the noise is generated by the mixing of a high velocity flow with ambient air. Such noise (and noise created by other circumstances) regularly propagates in all directions.

However, noise dampers according to prior art do not provide a solution to deal with noise if noise is already generated.

Hence, the technical problem of the present application can be seen in providing an improved silencer, which is able to reduce propagation of the noise leaving the silencer.

The technical problem of the present application is solved by a silencer according to claim 1 and the use of a silencer according to claim 16. Further advantageous embodiments of the present application are subject-matters of the dependent claims.

A silencer according to the present application for compressed air system comprises: A housing with an inlet opening for compressed air flow, a chamber, sound-damping means provided in the chamber, and a grid, comprising at least two passages through which the compressed air flow is adapted to leave the chamber.

Furthermore, the silencer comprises a skirt, which is arranged downstream of the grid, and the skirt is adapted to guide compressed gas leaving the passages of the grid. The diameter of the skirt is more preferably at least as big as the diameter of the grid, optimally the skirt and the grid have approximately the same or even the same diameter.

The skirt serves that if noise is already created, the propagation of noise is terminated in the radial direction, as noise waves are reflected back to the center of the flow, but cannot be heard by a person standing away from the silencer to a great extent.

In other words, the skirt drives the generated noise to the direction of the flow instead to the direction of an observer and hence works as a barrier. Hence, the propagation of the noise in a radial direction (of the silencer / grid) is terminated, as the skirt reflects noise waves to the center of the flow of air leaving the grid, i.e. streamline the noise propagation.

If the silencer and the skirt are directed to the ground direction (i.e. direction directed to the ground), noise might be directed mainly to the ground, and not to an ear of an observer (e.g. in a distance of 7 m from the silencer).

Furthermore, the skirt has an effect on the mixing, as there is less creation of mixing energy. The skirt reduces the surface for mixing (of compressed air and ambient air, which usually has a cone shape around the compressed air, i.e. high velocity flow), and hence reduces the surface for turbulence creation. A skirt is hence effective in particular for cases where a noise already has been created.

Furthermore, the skirt is adapted to terminate the mixing between the high velocity flow and the ambient air in the zone where the jet is not completely developed, as many individual jets are created by the grid.

Preferably, the skirt has a cylindrical or polygonal, preferably hexagonal, cross-section, or a combination of different cross-sections. Such cross-section is most effective for achieving the effects of the skirt.

Preferably, the skirt has a constant cross-sectional area over its length, or a cross-sectional area increasing or decreasing over the length of the skirt in the downstream direction.

The cross-section again is the area through which an air stream flows when flowing through the skirt.

In the case of an increasing cross-sectional area over the length of the skirt, the skirt works as a diffuser. In case of a decreasing cross-sectional area over the length of the skirt, the skirt acts as a confuser. The shape can be adapted to the flow cones which form in the mixing zone of compressed and ambient air.

Preferably, the skirt has a length between 2 and 200 mm. Preferred minimal lenghts are at least 5 mm, even more preferably at least 10 mm, and even more preferably at least 20 mm, most preferably at least 50 mm. Such lengths have been proven to be most effective for achieving the effects of the skirt.

Preferably, the cross-sectional area of the skirt at the inlet of the skirt is larger than the sum of the cross-sectional areas of all passages of the grid at their respective outlets. In other words: The overall cross-sectional area covered by skirt is larger than the overall cross-sectional area of all passages. In this case, the skirt can most effectively drive the generated noise in the direction of the flow. Further, this ensures that there is no increase of flow velocity in the skirt, which might lead to additional noise.

Preferably, the at least two passages have a length between 3 mm and 200 mm. Preferred minimal lengths are at least 4 mm, even more preferably at least 5 mm, even more preferably at least 7 mm, most preferably at least 10 mm. The passages with a length of at least 3 mm ensure a homogeneous flow of gas, and hence, the turbulence is reduced in the mixing region, where highly pressurized gas is mixed with ambient air. Hence, passages of at least 3 mm can effectively reduce the noise generated by the mixing of air, which flows out of the chamber and the sound-damping means. Passages of at least 3 mm hence contribute to avoid the noise creation by turbulent flows.

The longer the passages are, the more the effect of the flow homogenization is.

Preferably, wherein the cross-sectional area of the at least two passages respectively decreases from the inlet of the passage until a portion with lowest diameter, and increases from the portion with lowest diameter towards the outlet of the passage.

The specific shape of the passages (cross-sectional area of the at least two passages decreasing from the inlet of the passage until a portion with the lowest diameter within the passage, and then again increasing from the portion with lowest diameter towards the outlet of the passage) mimics a nozzle, which usually has optimized flow characteristics. Such nozzle shape is able to decrease the velocity of the flow.

The specific structure of the cross-sectional area of the at least two passages, which is a streamlined shape, reduces the separation vortices and the drag vortices, which might form after the grid. Such streamlined passages reduce the drag caused by the grid, and also reduce the flow resistance which affects the operation speed of e.g. a pneumatic valve. Furthermore, such streamlined passages can reduce the size and the intensity of the vortices behind the grid (which form as compressed air is mixed with ambient air), and hence reduce the noise energy created by the turbulent flow.

Therefore, an effective reduction of turbulence wakes (vortexes) is possible, in particular by reducing the turbulence intensity in the grid, the turbulence being formed by wakes created by the air separation through the grid.

Such passage length and shape contributes to direct the internally generated noise in the direction of the flow, instead of the direction of an observer (e.g. in a distance of 7 m).

Preferably, the effective surface ratio is between 60% and 90%, more preferably above 80%. The effective surface ratio is defined by the cross-sectional area covered by the passages (i.e. where flow through the grid can occur) divided by the overall cross-sectional area of the grid. A higher number of channels with smaller size has a higher rigidity. The optimal effective surface ratio depends on the available surface, the length of the passages, and the rigidity requirements

Preferably, the sound-damping means comprises a fibrous material, more preferably a polyethylene fiber mesh. Such fibrous material is adapted to damp the noise which is already generated, e.g. originating from a valve.

Preferably, the cross-section of the at least two passages is polygonal, more preferably hexagonal (i.e. forming a honeycomb structure). Hexagons can be divided by other shapes as well. For such hexagonal shape of the passages, the effective flow surface is best, as the residual area covered by the solid grid structure, where dead areas can emerge after leaving the passages, is minimal. Hence, there is an increased ratio from passage area to area covered by solid (i.e. the grid). Hence, such structure allows the highest ratio of the effective flow area over the total grid area. Therefore, the best efflux area can be used for the flow of compressed air over the grid area.

Alternatively, the cross-section of the at least two passages is round. Also with such shape, a very homogenous flow can be ensured.

Preferably, the portion of the lowest diameter (for example approximately in the middle of the length of the passages) has a cross-sectional area which is between 80% and 95% of the cross-sectional area of the inlet of the passage and/or the outlet of the passage, preferably above 85%.

Such geometrical constraints mimic the shape of a nozzle. By such shape of the channels, there is a decrease of the velocity of the flow of compressed gas. Such geometrical constraints lead to a low drag at the inlet, and a low wake at the outlet.

Furthermore, due to the nozzle shape, the mixing point / region (of pressurized and ambient gas) is towards from the grid, and the separation wakes decrease regarding their size. Further, the flow cores (velocity profile of flow leaving each channel of grid) get broader, leading to very homogenous flow with less turbulence, hence resulting in less noise.

In one embodiment, the inlet of the passage and the outlet of the passage have the same cross-sectional area, which leads to a homogenous flow. The cross-sectional area is the area through which the air flows in the inlet, the outlet or somewhere between them.

Preferably, the cross-sectional area of the passage is larger at the inlet of the passage than at the portion with the lowest diameter and the outside of the passage, the cross-sectional area of the passage is larger at the outlet of the passage than at the portion with the lowest diameter.

By such nozzle design, a very homogenous flow can be guaranteed.

In this case, the passages act as a confusor, focusing the flow at the outlet of the passage.

Alternatively, the cross-sectional area of the passage is larger at the outlet of the passage than at the portion with a lowest diameter and at the inlet of the passage, wherein the cross-sectional area of the passages is larger at the inlet of the passage than at the portion with the lowest diameter.

Such design of the nozzle is a diffusor, which also leads to a very rapid pressure reduction, however without generating noise, in particular by moving the mixing zone (of pressurized air and ambient air) away from the grid.

An inventive use of a silencer is a use for a brake system, preferably a braking system of a commercial vehicle, more preferably a braking system of an electrical commercial vehicle.

In the following, advantageous embodiments of the present application are described more in detail with the attached figures.
- Fig. 1: shows the silencers with skirts - in Fig. 1 a), the skirt acts as a confuser, and in Fig. 1 b), the skirt acts as a diffuser.
- Fig. 2: shows flow velocity profiles when a skirt is used downstream of passages of a grid. Fig. 2 a) shows such flow profiles directly downstream of the grid, and Fig. 2 b) shows the development of the flow velocity profile within the whole skirt.
- Fig. 3: shows a general structure of a silencer according to the present invention. Fig. 3 a) to 3 d) show different embodiments, in particular with regard to the shape of the passages.
- Fig. 4: shows a structure of the grid with passages more in detail - Fig. 4 a) to 4 d) and Fig. 4 f) to 4 i) show different shapes of the passages, and in Fig. 4 e), an isometric view of a structure according to Fig. 4 d) is shown.
- Fig. 5: shows the physical background of flow resistance of objects with different shapes.
- Fig. 6: shows flow velocity profiles, wakes and vortices, Fig. 6 a) herein shows a silencer according to prior art, and Fig. 6 b) and 6 c) show the influence of the passage length and shape on the flows.

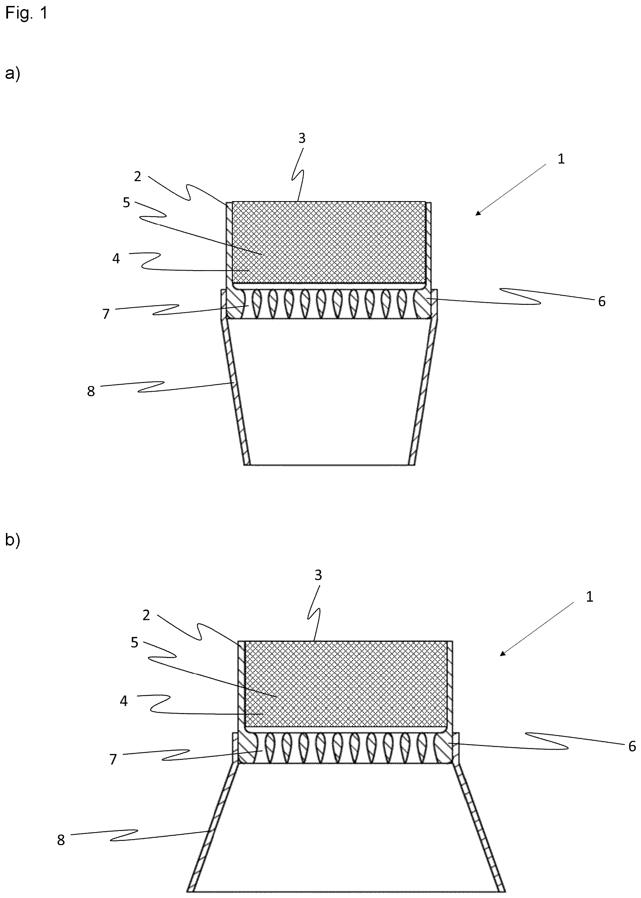

Fig. 1 shows a silencer 1 comprising a skirt 8 downstream of a grid 6. The silencer 1 comprises a housing 2 with an inlet opening 3, through which compressed air can flow in. Within the silencer 1, there is a chamber 4, which is filled with a sound-damping means 5, in this case a fibrous material. In the end of the silencer 1 in a flow direction, there is a grid 6, which has several passages 7. In Fig. 1 a), the skirt has a decreasing cross-sectional area (and diameter) in the flow direction and works as a condenser, and in Fig. 1 b), the skirt has an increasing cross-sectional area (and diameter) in the flow direction, hence working as a diffuser.

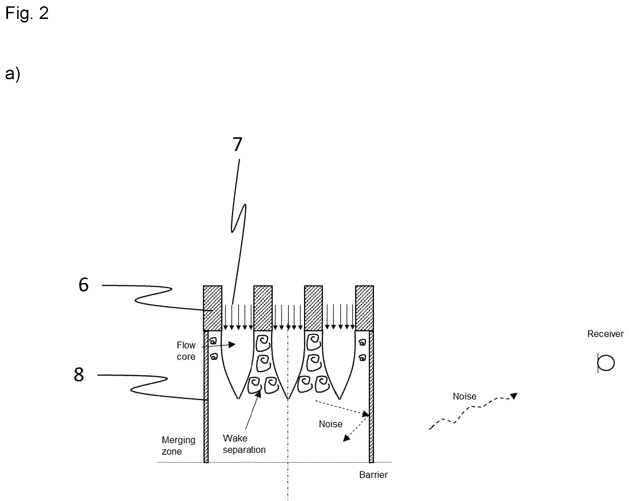

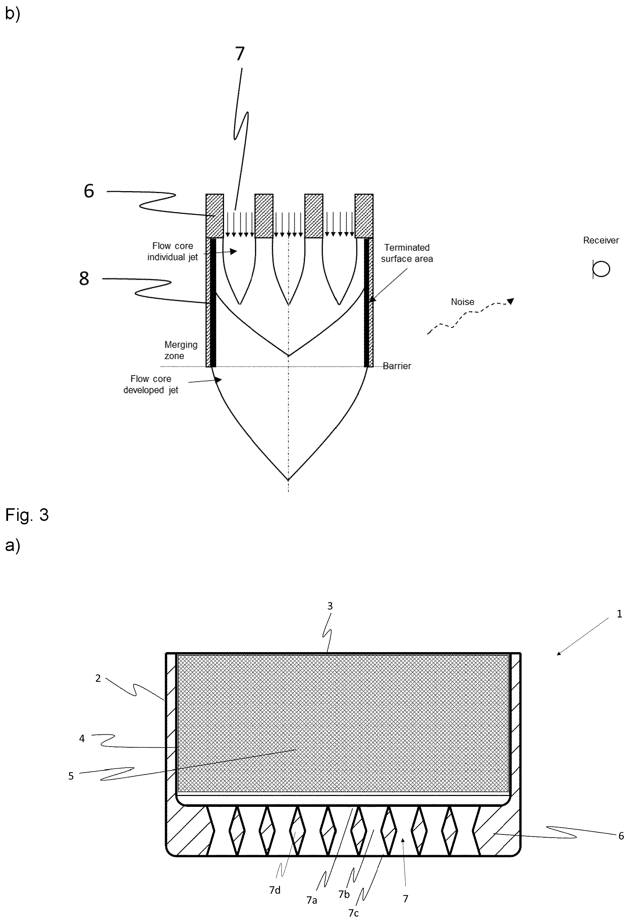

Fig. 2 shows flow velocity profiles when a skirt 8 is used downstream of passages 7 of a grid 6.

Fig. 2 a) shows such flow profiles directly downstream of the grid 6. Herein, it can be seen that individual, cone-shaped flow cores form at the outlet of the passages 7 of the grid. Between these flow cores, wake separation occurs. The skirt 8 acts as a barrier, and reflects noise to the middle of the flow. Little noise can reach and observer or receiver (e.g. a microphone) spaced apart radially form the skirt 8.

Fig. 2 b) shows the development of the flow velocity profile within the whole skirt 8.

Herein, it can be seen that the individual flow cores form a developed flow core downstream of the skirt 8. In this region, there are no turbulences any more.

Little noise can reach and observer or receiver (e.g. a microphone) spaced apart radially form the skirt 8.

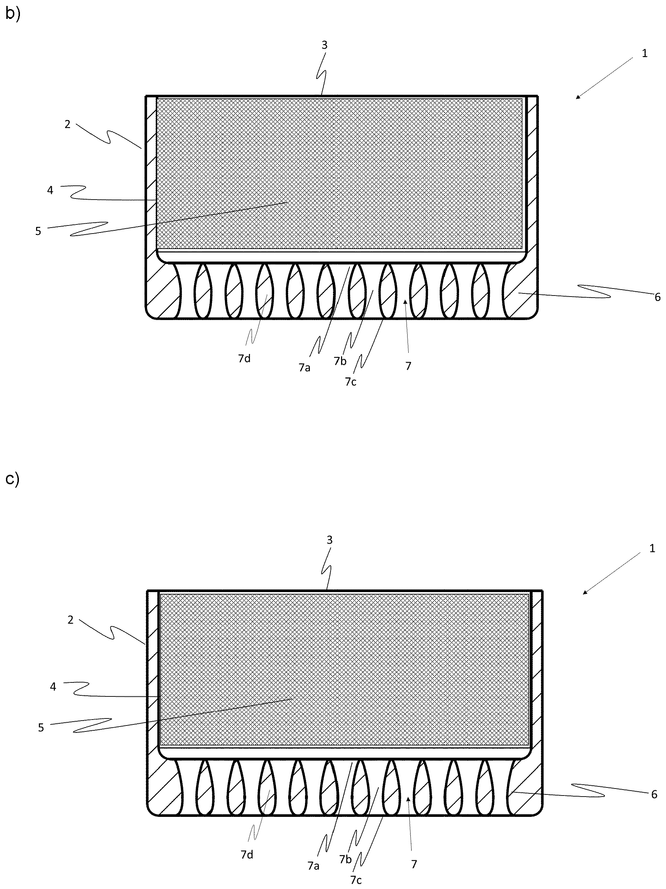

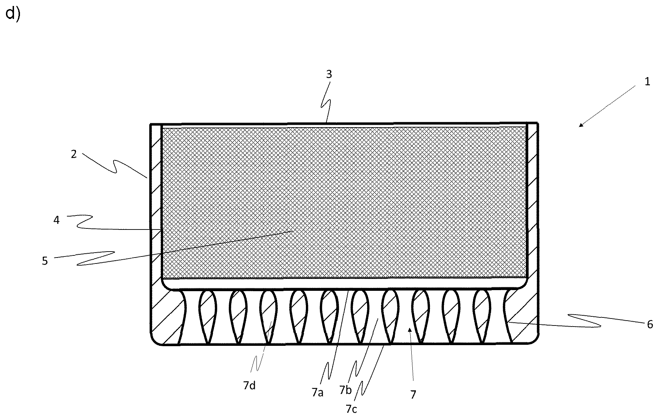

In Fig. 3, the general structure of a silencer 1 according to the present invention is described. The silencer 1 comprises a housing 2 with an inlet opening 3, through which compressed air can flow in. Within the silencer 1, there is a chamber 4, which is filled with a sound-damping means 5, in this case a fibrous material. In the end of the silencer 1 in a flow direction, there is a grid 6, which has several passages 7. Each passage 7 has an inlet 7a, a portion with the lowest diameter 7b, and an outlet 7c. The cross-sectional area decreases from the inlet 7a until the portion with the lowest diameter 7b, and then increases again until the outlet 7c.

In Fig. 3 a), the passages 7 have a polygonal shape. The cross-section of walls 7d between the passages 7 has a rhomboid shape.

In Fig. 3 b), the passages 7 have a round shape, wherein the cross-sectional area (and the diameter) of the inlet 7a and the outlet 7c of the passage 7 are about the same. The cross-section of the walls 7d between the passages 7 has a quasi-oval shape.

Fig. 3 c) shows an embodiment where the cross-sectional area (and the diameter) of an inlet 7a of the passage 7 is larger than the cross-sectional area (and the diameter) of the portion 7b with the lowest diameter and the outlet 7c of the passage 7. Herein, the cross-sectional area (and the diameter) of the outlet 7b of the passage 7 is greater compared to the portion 7b with the lowest diameter of the passage 7. The cross-section of the walls between the passages 7 has a shape of an elongated drop.

In Fig. 3 d), an embodiment is shown where the cross-sectional area (and the diameter) of an outlet 7c of the passage 7 is larger than the cross-sectional area (and the diameter) of the portion 7b with the lowest diameter and the inlet 7a of the passage 7. Herein, the cross-sectional area (and the diameter) of the inlet 7a of the passage 7 is larger compared to the portion 7b with the lowest diameter of the passage 7. The cross-section of the walls between the passages 7 has a carrot shape.

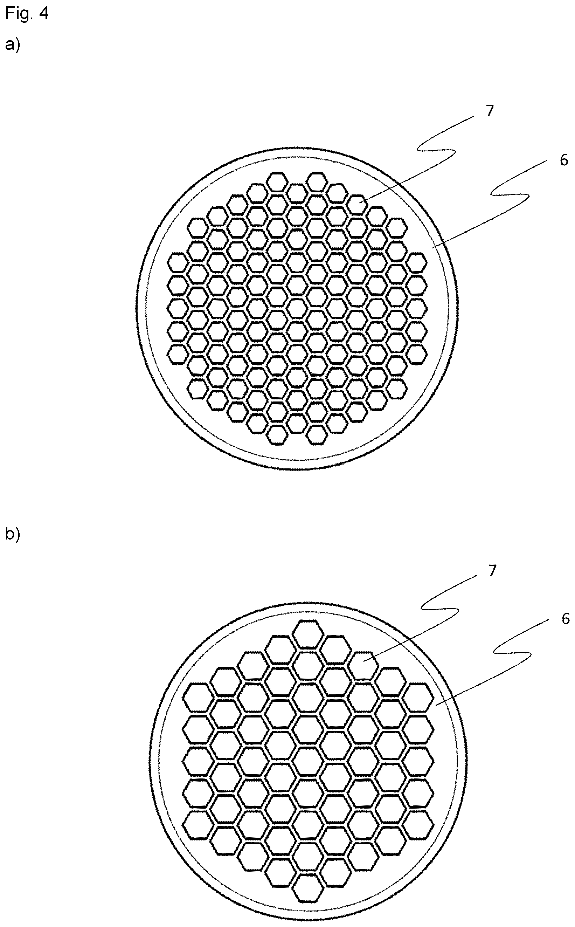

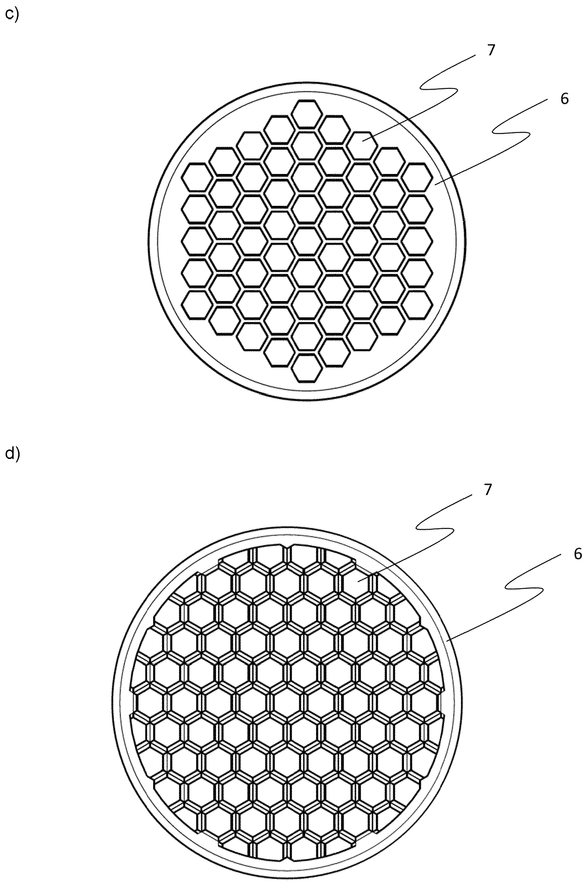

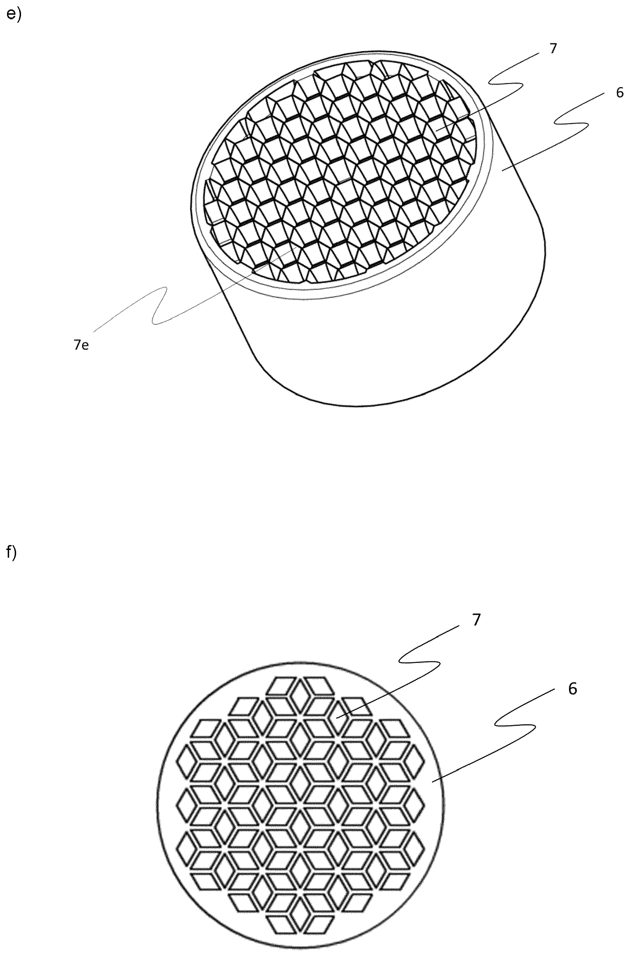

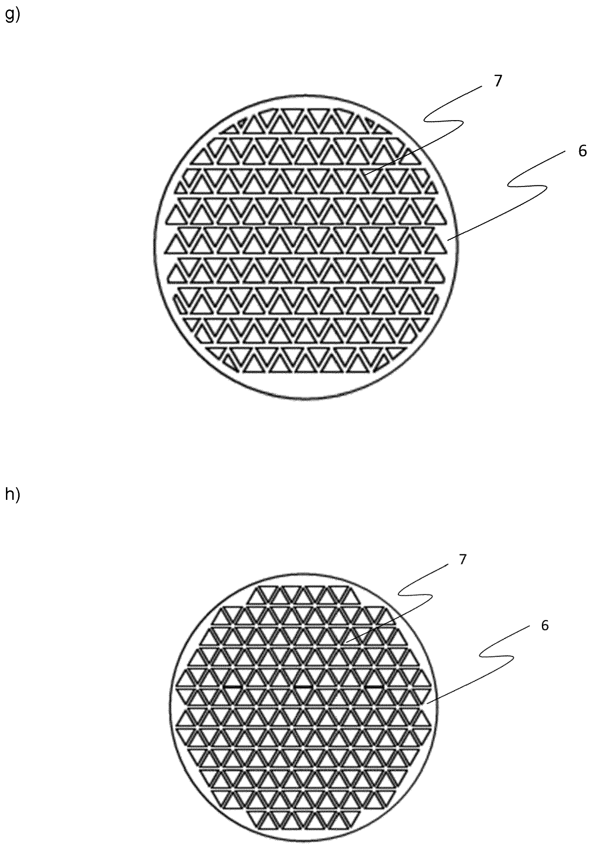

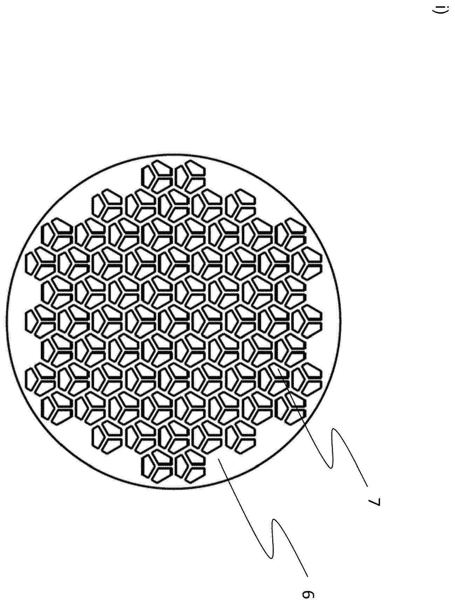

Fig. 4 a) shows a top view on a grid 6 with several passages 7a, which have a hexagonal shape. In Fig. 4 b), the same structure is shown, however the hexagons are larger compared to Fig. 4 a). In Fig. 4 c), even larger passages 7a (still hexagonal, but higher cross-sectional area) are shown. Fig. 4 d) shows a structure where the walls of the passages are tapered, but still have a hexagonal shape. Fig. 2 e) shows an isometric view of a grid 6 according to Fig. 4 d), again with hexagonal passages 7. The walls 7d separating the passages 7 are very thin in this embodiment (e.g. between 1 and 4 mm). A thickness below 1 mm would cause insufficient structural strength, while a thickness above 4 mm would reduce the cross-sectional area available for the flow too much.

Fig. 4 f) shows a grid 6 with rhomboid-shaped cross-sectional areas of the passages 7, also maximizing the cross-sectional area available for the flow. Fig. 4 g) and 4 h) show a grid 6 with triangle-shaped cross-sectional areas of the passages 7, also maximizing the cross-sectional area available for the flow. Fig. 4 i) shows a grid 6 with the arrangement of passages 7 as a star. In this case, pentagon-shaped cross-sectional areas of the passages 7 are used.

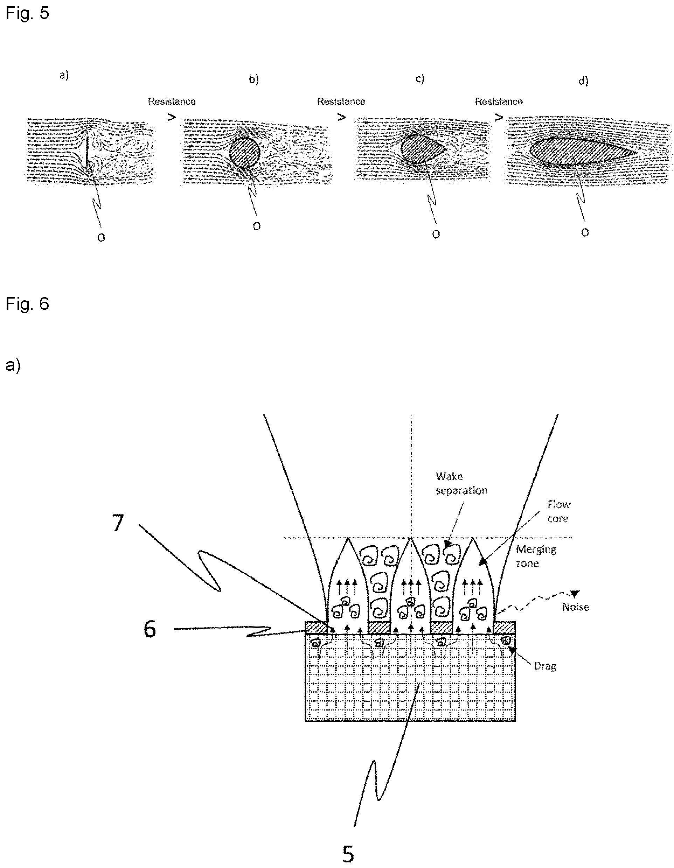

Fig. 5 shows the physical backgrounds of flow resistances objects O with a different shape. In Fig. 5 a), there is a thin wall, and it can be seen that there are dead volumes after the object O, and also vortices are generated. In Fig. 5 b), the object O has the shape of a ball or a sphere, it can be seen that there are still dead volumes, but less vortices are produced compared to Fig. 5 a). In Fig. 5 c), the object O has a combined shape, it is a drop shape (the broader part facing the flow direction). It can be seen that there are much less dead volumes and vortices compared to Fig. 5 a) and 5 b). In Fig. 5 d), a very thin object is shown, which is elongated in the flow direction. It can be seen that there are almost no dead volumes, and no vortices are generated. Hence, the flow resistance is minimal in Fig. 5 d).

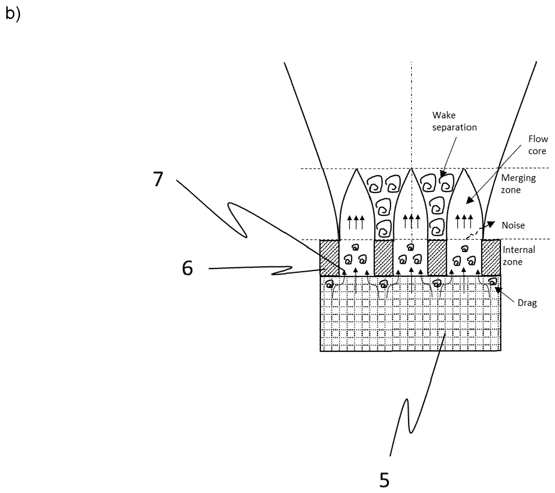

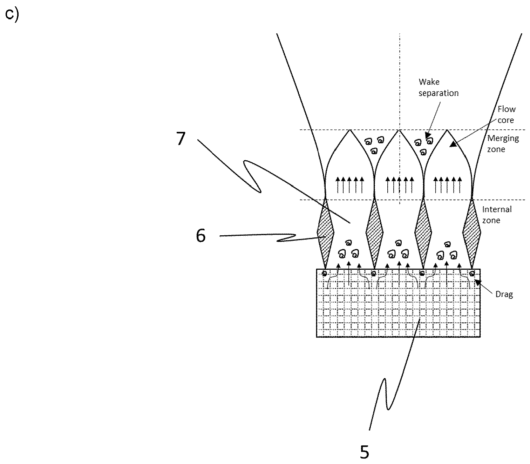

Fig. 6 a) shows a flow through passages 7 of a grid 6 of a silencer according to prior art. Fluid can flow through a sound-damping means 5, and can be seen that before reaching the grid 6 with the passages 7, drags are generated. As the grid 6 and hence the channel 7 are very thin, vortices are created within the flow in each channel 7, and the merging zone is directly downstream of the grid 6. In the merging zone, compressed and ambient air are mixed.

The velocity profiles of the flows having left the passages 7 have a cone shape. Between the cones, a wake separation occurs. This leads to vortices and hence a high turbulence. Noise is generated by the mixing of compressed and ambient air.

In Fig. 6 b), a thicker grid 7 (compared to Fig. 4 a)) is shown. It shows that there are less and smaller drags, and less vortices within the flows. Still, there is a wake separation in the merging zone, but the noise can be reduced.

Fig. 6 c) shows an elongated grid 6 (similar to Fig. 6 b)), however with a shape where the cross-sectional area of the passages decreases from the inlet to the section with the lowest diameter, but then again increases - a structure like a nozzle. It can be seen that there are even less drags in this embodiment, there is a little wake separation in the merging zone, but it can be seen that the flow cores are very broad, and hence less turbulence is generated, leading to almost no noise.

### LIST OF REFERENCE SIGNS

- 1: Silencer
- 2: Housing
- 3: Inlet opening
- 4: Chamber
- 5: Sound damping means
- 6: Grid
- 7: Passage
- 7a: Inlet of passage
- 7b: Portion with lowest diameter
- 7c: Outlet of passage
- 7d: Wall of passage
- 8: Skirt

- O: Object
- B: Braking system

## Claims

1. Silencer (1) for compressed air systems, comprising:
a housing (2) with an inlet opening (3) for a compressed gas flow,
a chamber (4),
sound damping means (5) provided in the chamber (4),
a grid (6), comprising at least two passages (7) through which the compressed air flow is adapted to leave the chamber (4),
**characterized in that** further comprising a skirt (8) being arranged downstream of the grid (6), wherein the skirt (8) is adapted to guide compressed gas leaving the passages (7) of the grid (6).

2. Silencer according to claim 1, wherein the skirt (8) has a cylindrical or polygonal, preferably hexagonal, cross-section, or a combination of different cross-sections.

3. Silencer according to one of claims 1 or 2, wherein the skirt (8) has a constant cross-sectional area, or cross-sectional area increasing or decreasing over the length of the skirt (8) in downstream direction.

4. Silencer according to one of the previous claims, wherein the skirt (8) has a length between 2 and 200 mm, preferably at least 5 mm, even more preferably at least 10 mm, even more preferably at least 20 mm, most preferably at least 50 mm.

5. Silencer according to one of the previous claims, wherein the cross-sectional area of the skirt (8) at the inlet of the skirt (8) is larger than the sum of the cross-sectional area of all passages (7) at their respective outlets (7c).

6. Silencer according to one of the previous claims, wherein the at least two passages (7) have a length between 3 and 200 mm, preferably at least 4 mm, more preferably at least 5 mm, even more preferably at least 7 mm, most preferably at least 10 mm.

7. Silencer according to one of the previous claims, wherein the cross-sectional area of the at least two passages (7) respectively decreases from the inlet (7a) of the passage until a portion with lowest diameter (7b), and increases from the portion with lowest diameter (7b) towards the outlet (7c) of the passage.

8. Silencer (1) according to one of the previous claims, wherein the grid (6) has an effective surface ratio between 60% and 90%, preferably above 80%, wherein the effective surface ratio is defined by the cross-sectional area covered by the passages divided by the overall cross-sectional area of the grid.

9. Silencer (1) according to one of the previous claims, wherein the sound damping means (5) comprises a fibrous material.

10. Silencer (1) according to one of the previous claims, wherein the cross-section of the at least two passages (7) is polygonal, preferably hexagonal.

11. Silencer (1) according to one claims 1 to 9, wherein the cross-section of the at least two passages (7) is round.

12. Silencer (1) according to claim 7, wherein a portion with lowest diameter (7b) of the at least two passages (7) has a cross-sectional area between 80% and 95% of the cross-sectional area of the inlet (7a) of at least two passages and/or the outlet (7c) of at least two passages, preferably above 85%.

13. Silencer (1) according to one of the previous claims, wherein the inlet (7a) of the at least two passages (7) and the outlet (7c) of at least two passages have the same cross-sectional area.

14. Silencer (1) according to one of claims 7 or 12, wherein the cross-sectional area of at least two passages (7) is larger at the inlet (7a) of at least two passages than at the portion with lowest diameter (7b) and the outlet (7c) of at least two passages, and wherein the cross-sectional area of the at least two passages (7) is larger at the outlet (7c) of at least two passages than at the portion with lowest diameter (7b).

15. Silencer (1) according to one of claims 7 or 12, wherein the cross-sectional area of at least two passages (7) is larger at the outlet (7c) of at least two passages than at the portion with lowest diameter (7b) and the inlet (7a) of at least two passages, and wherein the cross-sectional area of at least two passages (7) is larger at the inlet (7a) of at least two passages than at the portion with lowest diameter (7b).

16. Use of a silencer (1) according to one of claims 1 to 15 for a braking system, preferably a braking system (B) of a commercial vehicle.

## Patentansprüche

1. Schalldämpfer (1) für Druckluftsysteme, umfassend:
ein Gehäuse (2) mit einer Einlassöffnung (3) für einen Druckgasstrom,
eine Kammer (4),
Schalldämpfungsmittel (5), die in der Kammer (4) bereitgestellt werden,
ein Gitter (6), das mindestens zwei Durchgänge (7) umfasst, durch die aus der Kammer (4) auszutreten der Druckluftstrom angepasst ist,
**dadurch gekennzeichnet, dass** er weiter eine Schürze (8) umfasst, die stromabwärts von dem Gitter (6) angeordnet ist, wobei die Schürze (8) angepasst ist, um Druckgas, das die Durchgänge (7) des Gitters (6) verlässt, zu leiten.

2. Schalldämpfer nach Anspruch 1, wobei die Schürze (8) einen zylindrischen oder vieleckigen, vorzugsweise sechseckigen Querschnitt oder eine Kombination unterschiedlicher Querschnitte aufweist.

3. Schalldämpfer nach einem der Ansprüche 1 oder 2, wobei die Schürze (8) eine konstante Querschnittsfläche aufweist oder sich die Querschnittsfläche über die Länge der Schürze (8) in Stromabwärtsrichtung vergrößert oder verkleinert.

4. Schalldämpfer nach einem der vorhergehenden Ansprüche, wobei die Schürze (8) eine Länge zwischen 2 und 200 mm, vorzugsweise mindestens 5 mm, noch bevorzugter mindestens 10 mm, noch bevorzugter mindestens 20 mm, besonders bevorzugt mindestens 50 mm, aufweist.

5. Schalldämpfer nach einem der vorhergehenden Ansprüche, wobei die Querschnittsfläche der Schürze (8) am Einlass der Schürze (8) größer ist als die Summe der Querschnittsflächen aller Durchgänge (7) an ihren jeweiligen Auslässen (7c).

6. Schalldämpfer nach einem der vorhergehenden Ansprüche, wobei die mindestens zwei Durchgänge (7) eine Länge zwischen 3 und 200 mm, vorzugsweise mindestens 4 mm, bevorzugter mindestens 5 mm, noch bevorzugter mindestens 7 mm, besonders bevorzugt mindestens 10 mm, aufweisen.

7. Schalldämpfer nach einem der vorhergehenden Ansprüche, wobei die Querschnittsfläche der mindestens zwei Durchgänge (7) jeweils vom Einlass (7a) des Durchgangs bis zu einem Abschnitt mit dem geringsten Durchmesser (7b) abnimmt und von dem Abschnitt mit dem geringsten Durchmesser (7b) zum Auslass (7c) des Durchgangs hin zunimmt.

8. Schalldämpfer (1) nach einem der vorhergehenden Ansprüche, wobei das Gitter (6) ein effektives Oberflächenverhältnis zwischen 60 % und 90 %, vorzugsweise über 80 %, aufweist, wobei das effektive Oberflächenverhältnis durch die von den Durchgängen bedeckte Querschnittsfläche, geteilt durch die Gesamtquerschnittsfläche des Gitters, definiert ist.

9. Schalldämpfer (1) nach einem der vorhergehenden Ansprüche, wobei das Schalldämpfungsmittel (5) ein Fasermaterial umfasst.

10. Schalldämpfer (1) nach einem der vorhergehenden Ansprüche, wobei der Querschnitt der mindestens zwei Durchlässe (7) vieleckig, vorzugsweise sechseckig, ist.

11. Schalldämpfer (1) nach einem der Ansprüche 1 bis 9, wobei der Querschnitt der mindestens zwei Durchlässe (7) rund ist.

12. Schalldämpfer (1) nach Anspruch 7, wobei ein Abschnitt mit dem geringsten Durchmesser (7b) der mindestens zwei Durchgänge (7) eine Querschnittsfläche zwischen 80 % und 95 % der Querschnittsfläche des Einlasses (7a) von mindestens zwei Durchgängen und/oder des Auslasses (7c) von mindestens zwei Durchgängen, vorzugsweise oberhalb von 85 %, aufweist.

13. Schalldämpfer (1) nach einem der vorhergehenden Ansprüche, wobei der Einlass (7a) der mindestens zwei Durchgänge (7) und der Auslass (7c) von mindestens zwei Durchgängen dieselbe Querschnittsfläche aufweisen.

14. Schalldämpfer (1) nach einem der Ansprüche 7 oder 12, wobei die Querschnittsfläche von mindestens zwei Durchgängen (7) am Einlass (7a) von mindestens zwei Durchgängen größer ist als an dem Abschnitt mit dem geringsten Durchmesser (7b) und dem Auslass (7c) von mindestens zwei Durchgängen, und wobei die Querschnittsfläche der mindestens zwei Durchgänge (7) am Auslass (7c) von mindestens zwei Durchgängen größer ist als an dem Abschnitt mit dem geringsten Durchmesser (7b).

15. Schalldämpfer (1) nach einem der Ansprüche 7 oder 12, wobei die Querschnittsfläche von mindestens zwei Durchgängen (7) am Auslass (7c) von mindestens zwei Durchgängen größer ist als an dem Abschnitt mit dem geringsten Durchmesser (7b) und dem Einlass (7a) von mindestens zwei Durchgängen, und wobei die Querschnittsfläche von mindestens zwei Durchgängen (7) am Einlass (7a) von mindestens zwei Durchgängen größer ist als an dem Abschnitt mit dem geringsten Durchmesser (7b).

16. Verwendung eines Schalldämpfers (1) nach einem der Ansprüche 1 bis 15 für ein Bremssystem, vorzugsweise ein Bremssystem (B) eines Nutzfahrzeugs.

## Revendications

1. Silencieux (1) destiné aux systèmes à air comprimé, comprenant :
un boîtier (2) doté d'une ouverture d'admission (3) pour un flux de gaz comprimé,
une chambre (4),
un moyen d'amortissement sonore (5) prévu dans la chambre (4),
une grille (6), comprenant au moins deux passages (7) à travers lesquels le flux d'air comprimé est adapté pour quitter la chambre (4),
**caractérisé en ce qu'**il comprend en outre une jupe (8) étant agencée en aval de la grille (6), dans laquelle la jupe (8) est adaptée pour guider le gaz comprimé sortant des passages (7) de la grille (6).

2. Silencieux selon la revendication 1, dans lequel la jupe (8) présente une section transversale cylindrique ou polygonale, de préférence hexagonale, ou une combinaison de différentes sections transversales.

3. Silencieux selon l'une des revendications 1 ou 2, dans lequel la jupe (8) présente une aire de section transversale constante, ou une aire de section transversale augmentant ou diminuant sur la longueur de la jupe (8) dans la direction aval.

4. Silencieux selon l'une des revendications précédentes, dans lequel la jupe (8) présente une longueur comprise entre 2 et 200 mm, de préférence d'au moins 5 mm, encore plus préférentiellement d'au moins 10 mm, encore plus préférentiellement d'au moins 20 mm, le plus préférentiellement d'au moins 50 mm.

5. Silencieux selon l'une des revendications précédentes, dans lequel l'aire de section transversale de la jupe (8) au niveau de l'entrée de la jupe (8) est supérieure à la somme des aires de section transversale de tous les passages (7) au niveau de leurs sorties (7c) respectives.

6. Silencieux selon l'une des revendications précédentes, dans lequel les au moins deux passages (7) présentent une longueur comprise entre 3 et 200 mm, de préférence d'au moins 4 mm, plus préférentiellement d'au moins 5 mm, encore plus préférentiellement d'au moins 7 mm, le plus préférentiellement d'au moins 10 mm.

7. Silencieux selon l'une des revendications précédentes, dans lequel l'aire de section transversale des au moins deux passages (7) diminue, respectivement, de l'entrée (7a) du passage jusqu'à une partie de diamètre minimal (7b), et augmente de la partie de diamètre minimal (7b) vers la sortie (7c) du passage.

8. Silencieux (1) selon l'une des revendications précédentes, dans lequel la grille (6) présente un rapport de surface effectif compris entre 60 % et 90 %, de préférence supérieur à 80 %, dans lequel le rapport de surface effectif est défini par l'aire de section transversale couverte par les passages divisée par l'aire de section transversale totale de la grille.

9. Silencieux (1) selon l'une des revendications précédentes, dans lequel le moyen d'amortissement sonore (5) comprend un matériau fibreux.

10. Silencieux (1) selon l'une des revendications précédentes, dans lequel la section transversale des au moins deux passages (7) est polygonale, de préférence hexagonale.

11. Silencieux (1) selon l'une des revendications 1 à 9, dans lequel la section transversale des au moins deux passages (7) est ronde.

12. Silencieux (1) selon la revendication 7, dans lequel une partie de diamètre minimal (7b) des au moins deux passages (7) présente une aire de section transversale comprise entre 80 % et 95 % de l'aire de section transversale de l'entrée (7a) d'au moins deux passages et/ou de la sortie (7c) d'au moins deux passages, de préférence supérieure à 85 %.

13. Silencieux (1) selon l'une des revendications précédentes, dans lequel l'entrée (7a) des au moins deux passages (7) et la sortie (7c) des au moins deux passages présentent la même aire de section transversale.

14. Silencieux (1) selon l'une des revendications 7 ou 12, dans lequel l'aire de section transversale d'au moins deux passages (7) est supérieure au niveau de l'entrée (7a) d'au moins deux passages qu'au niveau de la partie de diamètre minimal (7b) et au niveau de la sortie (7c) d'au moins deux passages, et dans lequel l'aire de section transversale des au moins deux passages (7) est supérieure au niveau de la sortie (7c) d'au moins deux passages qu'au niveau de la partie de diamètre minimal (7b).

15. Silencieux (1) selon l'une des revendications 7 ou 12, dans lequel l'aire de section transversale d'au moins deux passages (7) est supérieure au niveau de la sortie (7c) d'au moins deux passages qu'au niveau de la partie de diamètre minimal (7b) et au niveau de l'entrée (7a) d'au moins deux passages, et dans lequel l'aire de section transversale d'au moins deux passages (7) est supérieure au niveau de l'entrée (7a) d'au moins deux passages qu'au niveau de la partie de diamètre minimal (7b).

16. Utilisation d'un silencieux (1) selon l'une des revendications 1 à 15 pour un système de freinage, de préférence un système de freinage (B) d'un véhicule commercial.
